# EUROPÄISCHE PATENTSCHRIFT

(11) **EP 1 671 824 B1**
(45) Veröffentlichungstag und Bekanntmachung des Hinweises auf die Patenterteilung: **31.03.2010**
(21) Anmeldenummer: 05025438.2
(22) Anmeldetag: 22.11.2005
(51) Int. Cl.: B60H 1/00

(54) **Rückschlagklappenanordnung, insbesondere für ein Belüftungssystem**
Check valve assembly, in particular for a ventilation system
Ensemble de clapet anti-retour, en particulier pour un système d'aération

(30) Priorität: 20.12.2004 DE 102004062427
(43) Veröffentlichungstag der Anmeldung: 21.06.2006
(73) Patentinhaber: Behr GmbH & Co. KG, 70469 Stuttgart (DE)
(72) Erfinder: Lindauer, Sascha, 73553 Alfdorf (DE); Litwing, Erich, 73565 Spraitbach (DE)
(74) Vertreter: Mantel, Berthold Friedrich

(56) Entgegenhaltungen:
- EP-A2- 0 841 202
- DE-A1- 3 323 176
- DE-A1- 3 618 569
- DE-C1- 19 748 425
- FR-A1- 2 789 629

## Beschreibung

Die Erfindung betrifft eine Rückschlagklappenanordnung, insbesondere für ein Belüftungssystem, gemäß dem Oberbegriff des Anspruches 1, und wie offenbart in EP 0841202 A2.

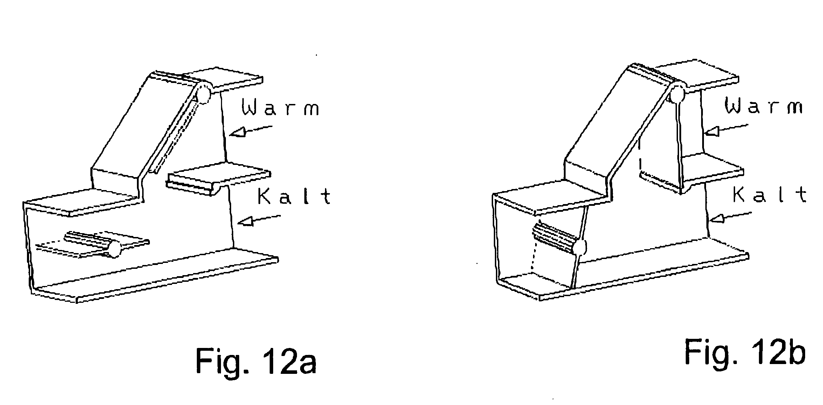

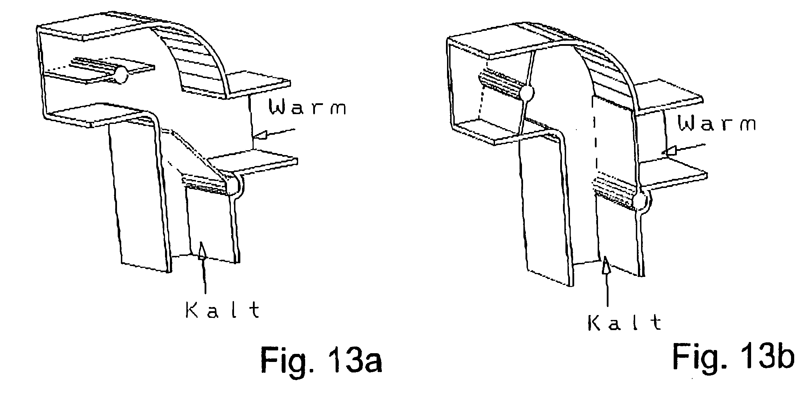

Bei Kraftfahrzeug-Klimaanlagen ist es durch dass Schließen von Austrittsdüsen in den Fahrgastinnenraum möglich, dass in der Klimaanlage kalte Luft an die Rückseite des Heizkörpers (bzw. in den Warmkanal) gelangt. Dies soll vermieden werden, um die Leistung des Heizkörpers nicht zu beeinträchtigen. Dazu werden herkömmlicherweise einseitig gelagerte Rückschlagklappen verwendet. Zwei Beispiel dieser Rückschlagklappen in herkömmlichen Rückschlagklappenanordnungen sind in den Figuren 12a,b und 13a,b dargestellt. Die den Klappen nachfolgenden Austrittsdüsen sind vorliegend in der Zeichnung als Klappen dargestellt, jedoch sind beliebige andere den Luftaustritt regelnde Elemente möglich. Wie aus den Figuren 12a,b und 13a,b ersichtlich ist, verlaufen alle Luftströmungen in einer gemeinsamen Ebene. Als Rückschlagklappen können sowohl oben gelagerten Klappen (siehe Figuren 12a und 12b) als auch unten gelagerten Klappen (siehe Figuren 13a und 13b) vorgesehen sein, jedoch lassen derartige Rückschlagklappen noch Wünsche offen. Die Rückstellung der Rückschlagklappen erfolgt selbsttätig, beispielsweise in Folge der Gewichtskraft oder eines die Rückschlagklappe schließenden Luftstroms, wobei jedoch auch eine Feder - oder ein anderes Element ohne äußere Regelung und Betätigung - für die Rückstellung vorgesehen sein kann.

Ausgehend von diesem Stand der Technik ist es Aufgabe der Erfindung, eine verbesserte Rückschlagklappenanordnung zur Verfügung zu stellen. Diese Aufgabe wird gelöst durch eine Heizungs- und/oder Klimmaanlage mit den Merkmalen des Anspruchs 1. Vorteilhafte Ausgestaltungen sind Gegenstand der Unteransprüche.

Erfindungsgemäß ist eine Heizungs- und/oder Klimmaanlage mit einer in einem Warmluftkanal angeordneten Rückschlagklappe vorgesehen, wobei der Warmluftkanal in einen Kaltluftkanal einmündet. Die räumliche Zusammenführung der Luftströme ermöglicht eine verbesserte Optimierung der Bauraumausnutzung, so dass die Klimaanlagen kleiner bauen und gegebenenfalls auch die Luftkanäle verkürzt werden können.

Durch die räumliche Zusammenführung der Luftströme lässt sich zudem eine bessere Durchmischung erreichen, wodurch auch eine bessere Temperaturverteilung in den Austrittsöffnungen erreicht werden kann. Zudem lassen sich in Folge der verbesserten Mischung durch nachfolgend angeordnete Temperaturfühler eine repräsentative Temperatur messen, so dass die Regelung der Lufteintrittstemperatur und somit auch die Regelung der Fahrzeug-Innenraumtemperatur verbessert werden kann.

Um eine verbesserte Vermischung der Luftströme zu ermöglichen, kann die Rückschlagklappe mindestens zweiteilig mit je einem eine Öffnung verdeckenden verschwenkbaren Bereich ausgebildet sein, oder mindestens eine Luftklappen-Öffnung aufweisen. Alternativ können auch mehrere Rückschlagklappen nebeneinander angeordnet sein.

Die Rückschlagklappe ist bevorzugt mindestens dreiteilig ausgebildet, oder weist mindestens zwei Luftklappen-Öffnungen auf, wodurch der durch die Rückschlagklappe strömende Luftstrom verwirbelt wird, was die Vermischung der Luftströme unterstützt.

Im Folgenden wird die Erfindung anhand eines Ausführungsbeispiels mit Varianten unter Bezugnahme auf die Zeichnung im Einzelnen erläutert. Es zeigen:
- Fig. 1: eine perspektivische schematische Darstellung eines Ausschnitts eines Luftfiührungsgehäuses mit einer Rückschlagklappenanordnung gemäß dem ersten Ausführungsbeispiel in geöffneter Stellung,

- Fig. 2: die Rückschlagklappenanordnung von Fig. 1 in geschlossener Stellung,
- Fig. 3: eine perspektivische schematische Darstellung eines Luftführungsgehäuses mit zwei Rückschlagklappeanordnungen gemäß dem zweiten Ausführiangsbeispiel,
- Fig. 4: einen Schnitt durch eine wasserseitig geregelte Kraftfahrzeug-Klimaanlage,

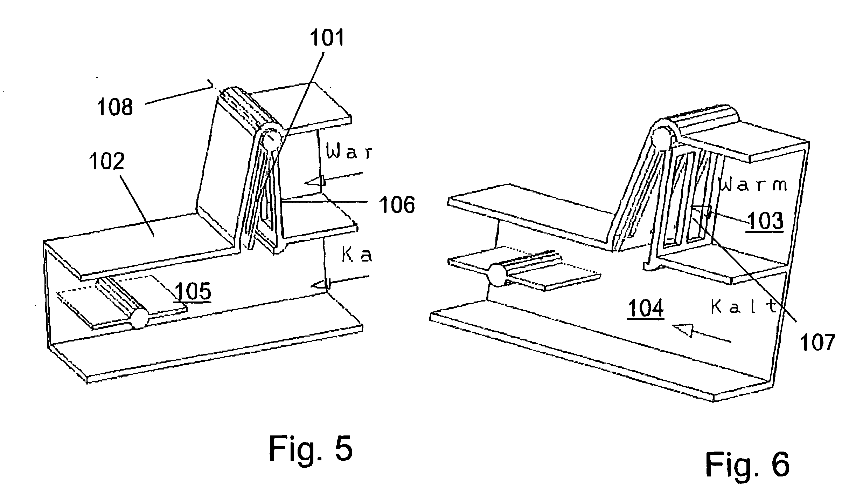

- Fig. 5: eine perspektivische geschnittene Darstellung eines Luftführungsgehäuses mit einer speziellen Ausgestaltung der Rückschlagklappe in geöffneter Stellung, wobei jedoch eine herkömmliche Rückschlagklappenanordnung dargestellt ist,
- Fig. 6: eine Darstellung einer anderen Perspektive des Luftführungsgehäuses mit Rückschlagklappe von Fig. 5,

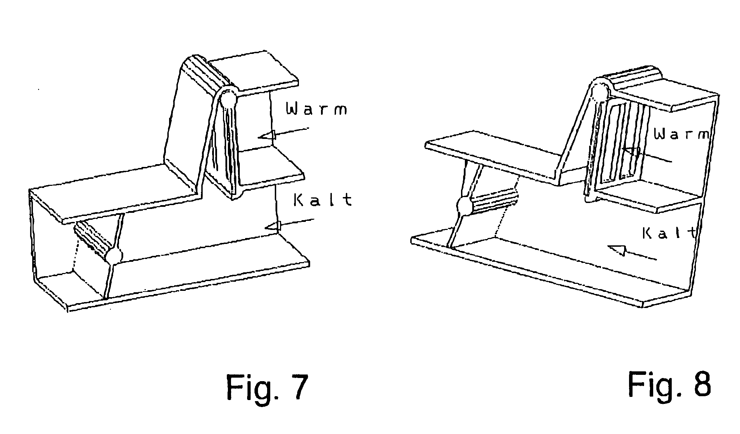

- Fig. 7: eine perspektivische geschnittene Darstellung eines Luftführungsgehäuses mit Rückschlagklappe von Fig. 5 in geschlossener Stellung,
- Fig. 8: eine Darstellung einer anderen Perspektive des Luftführungsgehäuses mit Rückschlagklappe von Fig. 7,
- Fig. 9: eine Draufsicht auf die Rückschlagklappe von Fig. 5,
- Fig. 10: eine Draufsicht auf eine Rückschlagklappe gemäß einer ersten Variante,
- Fig. 11: eine Draufsicht auf eine Rückschlagklappe gemäß einer zweiten Variante,
- Fig. 12a: ein Luftführungsgehäuse mit offener Rückschlagklappe gemäß dem Stand der Technik,
- Fig. 12b: das Luftführungsgehäuse von Fig. 12a mit geschlossener Rückschlagklappe,
- Fig. 13a: ein weiteres Luftführungsgehäuse mit offener Rückschlagklappe gemäß dem Stand der Technik, und
- Fig. 13b: das Luftführungsgehäuse von Fig. 13a mit geschlossener Rückschlagklappe.

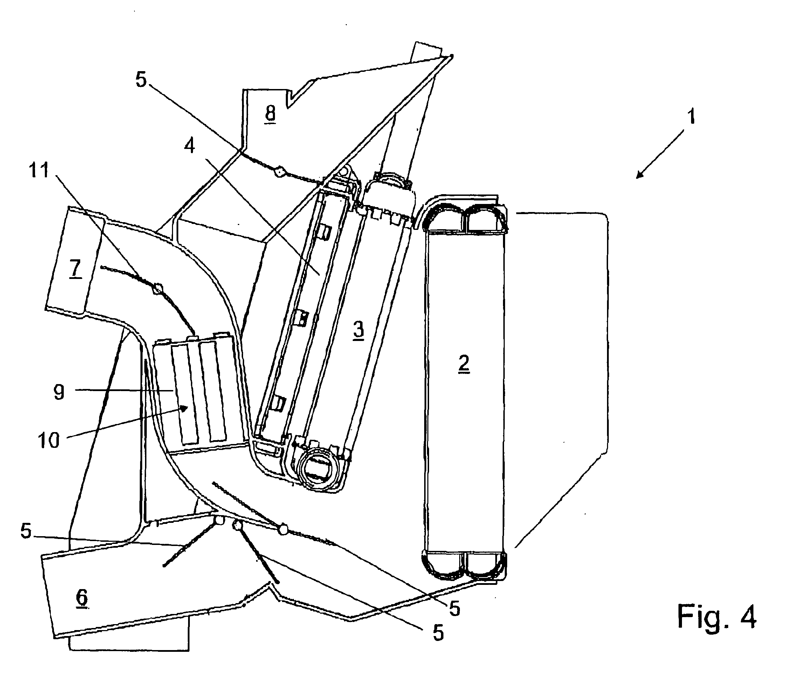

Eine wasserseitig geregelte Kraftfahrzeug-Klimaanlage 1 mit einem Verdampfer 2, einem Heizkörper 3 und einem PTC-Zuheizer 4, umfasst ein Luftkanalsystem mit einer Mehrzahl von betätigten Luftmisch- und Absperrklappen 5, welche insbesondere vor Abzweigungen von Luftkanälen, wie dem Luftkanal 6 zum Fußraum, dem Luftkanal 7 zur Belüftung oder dem Luftkanal 8 zur Windschutzscheibe (Defrost). Um ein Überströmen von kalter Luft zu verhindern, sind Rückschlagklappen 9 vorgesehen, wobei in Fig. 4 nur eine davon dargestellt ist.

Vorliegend ist in Fig. 4 eine einzonige Klimaanlage 1 dargestellt, jedoch ist die Erfindung auch auf zwei- und mehrzonige Klimaanlagen anwendbar, wobei sich die Zahl der Rückschlagklappen entsprechend erhöht. In einer alternativen, nicht dargestellten Ausführungsform, kann der Verdampfer 2 auch entfallen, so dass eine Heizungsanlage vorliegt, wobei dann der Kaltluftkanal einem Frischluftkanal entspricht.

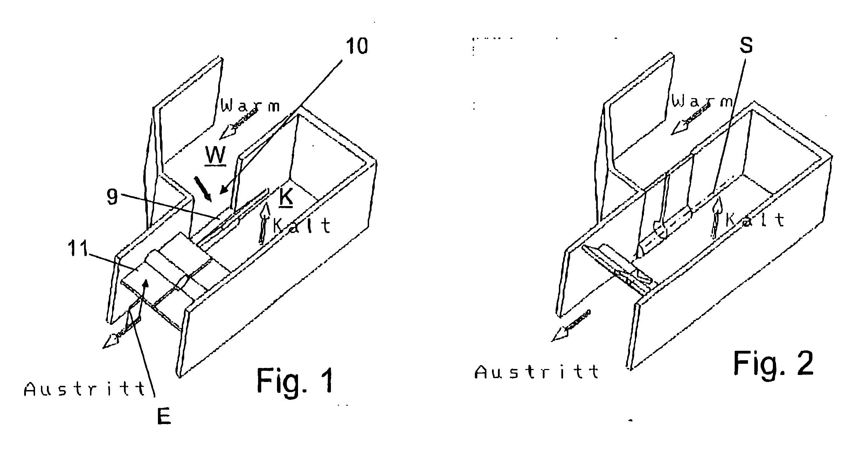

Das erfindungsgemäße Prinzip wird im Folgenden unter Bezugnahme auf die Figuren 1 bis 3 näher erläutert, wobei die Figuren 1 und 2 im Wesentlichen dem Bereich der Rückschlagklappe 9 von Fig. 4 entsprechen.

Vorliegend wird die Hauptströmungsrichtung durch den Kaltluftstrum (Haupt-oder vorliegend Kaltluftkanal K) zur Austrittsöffnung definiert, wobei der Hauptluftstrom im Bereich der Rückschlagklappe 9 um vorliegend 90° umgelenkt wird, wie durch Pfeile dargestellt. Die Pfeile im Hauptluftkanal definieren eine Ebene E, in welcher der Hauptluftstrom verläuft.

An der Einmündungsstelle 10 wird dem Hauptluftstrom ein Warmluftstrom (Neben- oder vorliegend Warmluftkanal W) zugeführt, wobei eine Rückschlagklappe 9, welche in ihrem geschlossen Zustand parallel zur Ebene E integriert in und parallel verlaufend zu der entsprechenden Wand des Kaltluftkanals K, durch welche der Warmluftkanal K dem Kaltluftkanal K zugeführt wird, angeordnet ist (vgl. Fig. 2), und welche ein Einströmen von Kaltluft aus dem Kaltluftkanal K in den Warmluftkanal W verhindert. Vorliegend mündet der Warmluftkanal W nach einer 90°-Biegung etwa senkrecht in den Kaltluftkanal K ein, wobei die Ebene, in welcher der Warmluftkanal W angeordnet ist, die Ebene, in welcher der Kaltluftkanal K angeordnet ist, vorliegend in einem Winkel von 90° schneidet.

Vorliegend verläuft die Schwenkachse S der Rückschlagklappe 9 parallel zur Schnittgeraden der beiden Ebenen, in welchen die Kanäle K und W verlaufen, wobei die Rückschlagklappe 9 als stehende Rückschlagklappe 9 ausgebildet ist. Alternativ kann es sich hierbei auch um eine hängende Rückschlagklappe handeln, oder die Schwenkachse kann auch parallel zum die Strömungsrichtung des eintrittsseitigen Kaltluftstroms verdeutlichenden Pfeil verlaufen, insbesondere auf der eintrittsseitigen Seite (in Fig. 2 rechts).

Der Rückschlagklappenanordnung nachfolgend im gemeinsamen Luftkanal angeordnet ist symbolisch eine Klappe 11 zur Drosselung des Luftstroms dargestellt, wobei an Stelle der Klappe 11 auch beliebige andere Elemente zur Drosselung des Luftstroms vorgesehen sein können.

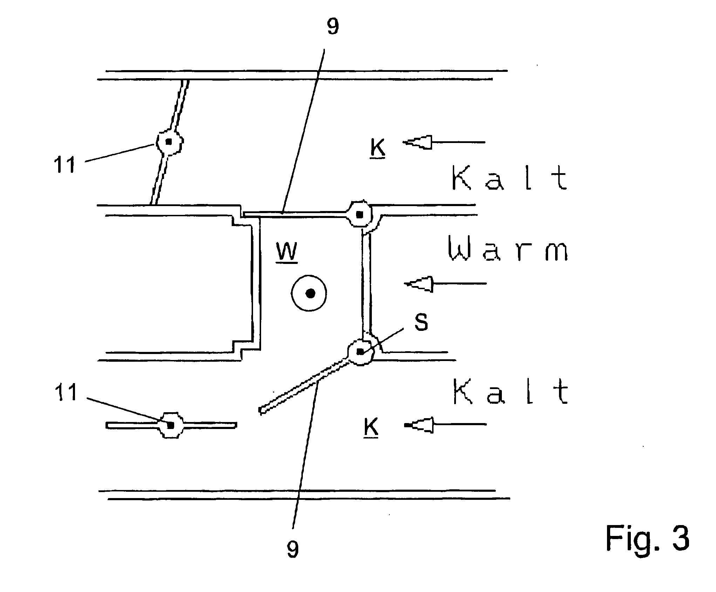

Gemäß dem in Fig. 3 dargestellten zweiten Ausführungsbeispiel sind zwei Kaltluftkanäle K vorgesehen, wobei jeder der Kaltluftkanäle K eine Ebene E definiert, die vorliegend zusammenfallen (Blattebene). Der vom Warmluftkanal S kommende Warmluftstrom strömt entgegen der Blickrichtung, wie durch den Pfeil, von dem nur die Pfeilspitze ersichtlich ist, angedeutet, und wird auf Grund einer geschlossenen ersten Rückschlagklappe 9 an der Einmündungsstelle 10 zum in Fig. 3 oben dargestellten ersten Kaltluftkanal K (bewirkt durch die nachfolgende Klappe 11, die geschlossen ist, weshalb der Stau-Luftdruck an der Einmündungsstelle 10 im ersten Kaltluftkanal K größer als im Warmluftkanal W ist) und einer geöffneten zweiten Rückschlagklappe 9 zum in Fig. 3 unten dargestellten zweiten Kaltluftkanal K vorliegend ausschließlich in den zweiten Kaltiuftkanal K geteitet. Auch in diesem Fall ist die Ebene, in welcher der Warmluftkanal W angeordnet ist, senkrecht zur Ebene E, in welcher der jeweilige Kaltluftkanal K angeordnet ist, angeordnet.

In Folge der schrägen oder bevorzugt der senkrechten Anordnung der Ebenen, erfolgt eine verbesserte Vermischung der Warm- und Kaltluftströme bei zumindest teilweise geöffneter Rückschlagklappe 9. Die Vermischung der Luftströme kann durch zusätzliche Maßnahmen verbessert werden, beispielsweise durch eine Ausgestaltung der Rückschlagklappe 9, wie im Folgenden beschrieben, allerdings unter Darstellung einer herkömmlichen Rückschlagklappenanordnung.

Eine Rückschlagklappe 101 zur Verhinderung einer Luftrückströmung ist in einem Luftführungsgehäuse 102 einer Kraftfahrzeug-Klimaanlage am Endbereich des vom Heizer kommenden Warmluftkanals 103 bevor dieser in den vom Verdampfer kommenden Kaltluftkanal 104 einmündet angeordnet. Der Kaltluftkanal 104 wird im Folgenden von der Einmündungsstelle an als Mischluftkanal 105 bezeichnet. Vorliegend verlaufen Warmluftkanal 103 und Kaltluftkanal 104 parallel zueinander, wobei der Warmluftkanal 103 zur Einleitung in den Kaltluftkanal 104 umgelenkt wird.

Am Ende des Warmluftkanals 103 ist - etwa senkrecht zum Warmluftkanal 103 und Kaltluftkanal 104 verlaufend - eine Wand 106 mit einer Mehrzahl von, vorliegend zwei, rechteckförmigen Wand-Öffnungen 107 vorgesehen, durch welche der Warmluftstrom bei geöffneter Rückschlagklappe 101 strömen kann. Am vom Kaltluftkanal 104 beabstandeten Ende der Wand 106 ist die Schwenkachse 108 der Rückschlagklappe 101 angeordnet, wobei im eingebauten Zustand die Schwenkachse 108 horizontal verläuft und oben angeordnet ist, so dass die Rückschlagklappe 101 durch die Schwerkraft automatisch schließt, sobald der Warmluftstrom zu gering oder kein Warmluftstrom vorhanden ist. Die Rückschlagklappe 101 entspricht einer herkömmlichen rechteckförmigen Rückschlagklappe, weist aber vorliegend drei rechteckförmige, relativ schmal ausgebildete Luftklappen-Öffnungen 111 auf, wobei im geschlossenen Zustand der Rückschlagklappe 101 diese Luftklappen-Öffnungen 111 versetzt zu den Wand-Öffnungen 107 angeordnet sind, so dass die Wand-Öffnungen 107 durch Zwischen- und Randbereiche der LuftKlappen-Öffnungen verschlossen werden.

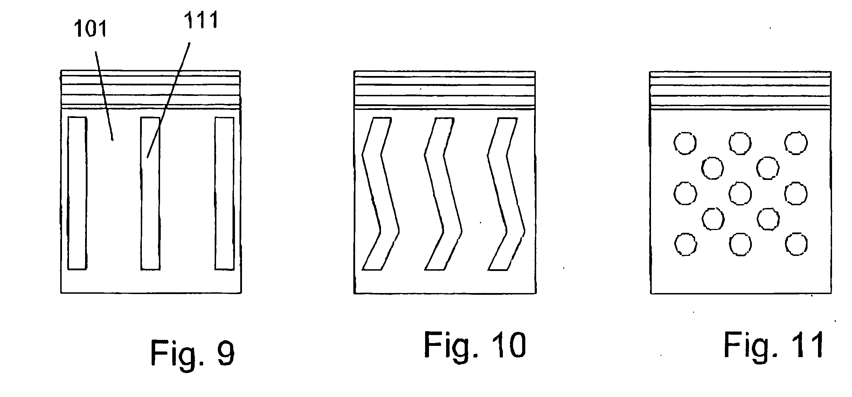

Varianten der Öffnungsformen in der Rückschlagklappe sind in den Figuren 10 und 11 dargestellt. So sind beispielsweise zick-zack-förmig verlaufende Öffnungen (Fig. 10) oder kreisförmige Öffnungen (Fig. 11) möglich. Die Öffnungen in der Wand entsprechen in ihrer Form den Öffnungen der Rückschlagklappe, jedoch sind die Öffnungen versetzt angeordnet, so dass in geschlossener Stellung der Rückschlagklappe kein Durchgang freigegeben ist. Insbesondere bei einer Vielzahl kleiner Öffnungen können diese auch gruppiert angeordnet sein.

An Stelle der Luftklappen-Öffnungen können beispielsweise auch gleichwirkende Schlitze vorgesehen sein, welche mit Öffnungen in einer Wand oder mit gleichwirkenden Vorsprüngen zusammenwirken. Auch das Vorsehen mehrerer Rückschlagklappen vor Öffnungen die von einem Luftkanal in einen zweiten Luftkanal münden, entspricht in der Wirkung dem Vorsehen von Schlitzen, wobei die Luftklappen miteinander verbunden oder unabhängig voneinander sein können.

## Patentansprüche

1. Heizungs- und/oder Klimaanlage aufweisend einen Heizkörper (3) und ein Luftkanalsystem mit einer Rückschlagklappenanordnung mit einer in einem Warmluftkanal (W) angeordneten Rückschlagklappe (9), wobei der Warmluftkanal (W) in einen Kaltluftkanal (K) einmündet, der zumindest in einem Bereich um die Einmündungsstelle (10) in einer Ebene (E) angeordnet ist, wobei der Warmluftkanal (W) quer zur Ebene (E) einmündet, **dadurch gekennzeichnet, dass** der Warmluftkanal (W) an der Einmündungsstelle (10) senkrecht zum Kaltluftkanal (K) verläuft, wobei der Warmluftkanal (W) in einer Ebene (E) angeordnet ist, die die Ebene (E) in der, der Kaltluftkanal angeordnet ist um 90° schneidet, wobei die Rückschlagklapppe in ihrem geschlossenen Zustand parallel zur Ebene (E) integriert in und parallel verlaufend zur entsprechenden Wand des Kaltluftkanals K, durch welche der Warmluftkanal dem Kaltluftkanal zugeführt wird, angeordnet ist.

2. Heizungs- und/oder Klimaanlage nach Anspruch 1, **dadurch gekennzeichnet, dass** der Kaltluftkanal (K) im Bereich der Einmündungsstelle (10) eine Biegung aufweist.

3. Heizungs- und/oder Klimaanlage nach Anspruch 1 oder 2, **dadurch gekennzeichnet, dass** der Warmluftkanal (W) im Bereich der Einmündungsstelle (10) eine Biegung aufweist.

4. Heizungs- und/oder Klimaanlage nach einem der vorhergehenden Ansprüche, **dadurch gekennzeichnet, dass** die Rückschlagklappe (9) in den Kaltluftkanal (K) schwenkbar ist.

5. Heizungs- und/oder Klimaanlage nach einem der vorhergehenden Ansprüche, **dadurch gekennzeichnet, dass** die Schwenkachse (S) der Rückschlagklappe (9) parallel zur Schnittgeraden der beiden Ebenen, in welchen die Luftkanäle (K und W) verlaufen, angeordnet ist.

6. Heizungs- und/oder Klimaanlage nach einem der vorhergehenden Ansprüche, **dadurch gekennzeichnet, dass** die Rückschlagklappe (101) mindestens eine Luftklappen-Öffnung (111) oder einen Luftklappen-Schlitz aufweist.

7. Heizungs- und/oder Klimaanlage nach Anspruch 6, **dadurch gekennzeichnet, dass** die Rückschlagklappe (101) mindestens zwei Luftklappen-Öffnungen (111) oder Luftklappen-Schlitze aufweist.

8. Heizungs- und/oder Klimaanlage nach Anspruch 6 oder 7, **dadurch gekennzeichnet, dass** die Rückschlagklappe (101) in geschlossener Stellung an einer Wand (106) oder einem Vorsprung anliegt, wobei die Wand (106) oder der Vorsprung die mindestens eine Luftklappen-Öffnung (111) oder den mindestens einen Luftklappen-Schlitz verdeckt.

9. Heizungs- und/oder Klimaanlage nach Anspruch 8, **dadurch gekennzeichnet, dass** die Rückschlagklappe (101) eine Form aufweist, welche im Wesentlichen versetzt zu der Wand-Öffnung (107) ausgebildet ist, so dass im geschlossenen Zustand verdeckende Bereich der Wand (106) mit Öffnungen der Rückschlagklappe (101) und umgekehrt Öffnungen der Wand (106) mit verdeckenden Bereichen der Rückschlagklappe (101) fluchten.

10. Heizungs- und/oder Klimaanlage nach einem der vorhergehenden Ansprüche, **dadurch gekennzeichnet, dass** die Rückschlagklappe (9, 101) durch die Wirkung der Schwerkraft selbsttätig schließend ausgebildet ist.

11. Heizungs- und/oder Klimaanlage nach einem der vorhergehenden Ansprüche, **dadurch gekennzeichnet, dass** die Rückschlagklappe (101) gemeinsam mit der Wand eine Baugruppe bildet.

12. Heizungs- und/oder Klimaanlage nach einem der vorhergehenden Ansprüche, **dadurch gekennzeichnet, dass** mindestens zwei, insbesondere mindestens drei, getrennt voneinander ausgebildete Rückschlagklappen vorgesehen sind, welche unabhängig voneinander voneinander getrennt ausgebildete Öffnungen eines Luftkanals verschließen oder freigeben können.

13. Heizungs- und/oder Klimaanlage nach Anspruch 6, **dadurch gekennzeichnet, dass** die Rückschlagklappen miteinander fluchtende Schwenkachsen aufweisen.

14. Heizungs- und/oder Klimaanlage nach einem der Ansprüche 1 bis 13, **dadurch gekennzeichnet, dass** die Heizungs- und/oder Klimaanlage (1) zumindest eines der folgenden Bauteile umfasst: Wärmetauscher (2, 3, 4), Verdampfer (2), Zuheizer, insbesondere PTC-Zuheizer (4), Filter, Temperaturmischklappe, einen oder mehrere Strömungskanäle (6, 7, 8, K, W, 103, 104, 105) und eine oder mehrere Steuerklappen (5) zur Mischung und/oder Verteilung der Luft auf die Strömungskanäle (6, 7, 8).

## Claims

1. Heating and/or air conditioning system, comprising a radiator (3) and an air duct system with a check valve arrangement comprising a check valve (9) disposed in a warm air duct (W), the warm air duct (W) terminating in a cold air duct (K) arranged in a plane (E) at least in a region around the termination point (10), the warm air duct (W) terminating at right angles to the plane (E), **characterised in that** the warm air duct (W) extends at right angles to the cold air duct (K) at the termination point (10), the warm air duct (W) being arranged in a plane (E) intersecting the plane (E) in which the cold air duct (K) is arranged at an angle of 90 degrees, wherein the check valve in its closed state is, in parallel to the plane (E), integrated into and extending parallel to the respective wall of the cold air duct (K) through which the warm air duct is routed to the cold air duct.

2. Heating and/or air conditioning system according to claim 1, **characterised in that** the cold air duct (K) has a bend in the region of the termination point (10).

3. Heating and/or air conditioning system according to claim 1 or 2, **characterised in that** the warm air duct (W) has a bend in the region of the termination point (10).

4. Heating and/or air conditioning system according to any of the preceding claims, **characterised in that** the check valve (9) can be pivoted into the cold air duct (K).

5. Heating and/or air conditioning system according to any of the preceding claims, **characterised in that** the pivot axis (S) of the check valve (9) extends parallel to the straight line of intersection of the two planes where the air ducts (K and W) are arranged.

6. Heating and/or air conditioning system according to any of the preceding claims, **characterised in that** the check valve (101) is provided with at least one air flap opening (111) or air flap slot.

7. Heating and/or air conditioning system according to claim 6, **characterised in that** the check valve (101) is provided with at least two air flap openings (111) or air flap slots.

8. Heating and/or air conditioning system according to claim 6 or 7, **characterised in that** the check valve (101) bears against a wall (106) or a projection in its closed state, the wall (106) or the projection covering the at least one air flap opening (111) or at least one air flap slot.

9. Heating and/or air conditioning system according to claim 8, **characterised in that** the check valve (101) has a shape substantially offset relative to the wall opening (107), so that in the closed state covering regions of the wall (106) are aligned with openings of the check valve (101) and openings of the wall (106) are aligned with covering regions of the check valve (101).

10. Heating and/or air conditioning system according to any of the preceding claims, **characterised in that** the check valve (9, 101) is designed to close automatically under the action of gravity.

11. Heating and/or air conditioning system according to any of the preceding claims, **characterised in that** the check valve (101) forms an assembly together with the wall.

12. Heating and/or air conditioning system according to any of the preceding claims, **characterised in that** at least two, in particular at least three, individual check valves are provided, which are capable of independently closing or opening separate openings of an air duct.

13. Heating and/or air conditioning system according to claim 6, **characterised in that** the check valves are provided with mutually aligned pivot axes.

14. Heating and/or air conditioning system according to any of claims 1 to 13, **characterised in that** the heating and/or air conditioning system (1) comprises at least one of the following components: heat exchanger (2, 3, 4), evaporator (2), auxiliary heater, in particular PTC auxiliary heater (4), filter, temperature blend door, one or more flow ducts (6, 7, 8, K, W, 103, 104, 105) and one or more control valves (5) for blending and/or distributing the air among the flow ducts (6, 7, 8).

## Revendications

1. Système de chauffage et / ou de climatisation présentant un radiateur (3) et un système de conduits d'air comprenant un agencement de clapets antiretour comportant un clapet antiretour (9) disposé dans un conduit d'air chaud (W), où le conduit d'air chaud (W) débouche dans un conduit d'air froid (K) qui, au moins dans une zone autour du point d'entrée (10), est disposé dans un plan (E), où le conduit d'air chaud (W) débouche de façon transversale par rapport au plan (E),
**caractérisé en ce que**, au niveau du point d'entrée (10), le conduit d'air chaud (W) s'étend de façon perpendiculaire au conduit d'air froid (K), où le conduit d'air chaud (W) est disposé dans un plan (E) qui coupe à 90° le plan (E) dans lequel est disposé le conduit d'air froid, où le clapet antiretour, lorsqu'il est fermé, est disposé parallèlement au plan (E), en étant intégré à la paroi correspondante du conduit d'air froid (K) et en s'étendant parallèlement à celle-ci, paroi à travers laquelle le conduit d'air chaud arrive jusqu'au conduit d'air froid.

2. Système de chauffage et / ou de climatisation selon la revendication 1, **caractérisé en ce que** le conduit d'air froid (4) présente un coude dans la zone du point d'entrée (10).

3. Système de chauffage et / ou de climatisation selon la revendication 1 ou 2, **caractérisé en ce que** le conduit d'air chaud (W) présente un coude dans la zone du point d'entrée (10).

4. Système de chauffage et / ou de climatisation selon l'une quelconque des revendications précédentes, **caractérisé en ce que** le clapet antiretour (9) est monté de façon pivotante dans le conduit d'air froid (K).

5. Système de chauffage et / ou de climatisation selon l'une quelconque des revendications précédentes, **caractérisé en ce que** l'axe de pivotement (S) du clapet antiretour (9) est disposé parallèlement aux droites d'intersection des deux plans dans lesquels s'étendent les conduits d'air (K et W).

6. Système de chauffage et / ou de climatisation selon l'une quelconque des revendications précédentes, **caractérisé en ce que** le clapet antiretour (101) présente au moins une ouverture (111) de volet d'air ou une fente de volet d'air.

7. Système de chauffage et / ou de climatisation selon la revendication 6, **caractérisé en ce que** le clapet antiretour (101) présente au moins deux ouvertures (111) de volet d'air ou fentes de volet d'air.

8. Système de chauffage et / ou de climatisation selon la revendication 6 ou 7, **caractérisé en ce que** le clapet antiretour (101), en position fermée, vient en appui sur une paroi (106) ou sur une partie saillante, où la paroi (106) ou la partie saillante recouvre l'ouverture (111) - au moins au nombre de un - du volet d'air ou la fente - au moins au nombre de un - du volet d'air.

9. Système de chauffage et / ou de climatisation selon la revendication 8, **caractérisé en ce que** le clapet antiretour (101) présente une forme qui est configurée en étant sensiblement décalée par rapport à l'ouverture (107) de la paroi, de sorte que, en position fermée, des zones couvrantes de la paroi (106) sont alignées avec des ouvertures du clapet antiretour (101) et, inversement, des ouvertures de la paroi (106) sont alignées avec des zones couvrantes du clapet antiretour (101).

10. Système de chauffage et / ou de climatisation selon l'une quelconque des revendications précédentes, **caractérisé en ce que** le clapet antiretour (9, 101) est configuré en se fermant automatiquement sous l'effet de la force de gravité.

11. Système de chauffage et / ou de climatisation selon l'une quelconque des revendications précédentes, **caractérisé en ce que** le clapet antiretour (101), associé à la paroi, forme un ensemble.

12. Système de chauffage et / ou de climatisation selon l'une quelconque des revendications précédentes, **caractérisé en ce qu'**il est prévu au moins deux, en particulier au moins trois clapets antiretour configurés en étant séparés les uns des autres, clapets antiretour qui, indépendamment les uns des autres, peuvent obturer ou libérer des ouvertures d'un conduit d'air, configurées séparément les unes des autres.

13. Système de chauffage et / ou de climatisation selon la revendication 6, **caractérisé en ce que** les clapets antiretour présentent des axes de pivotement alignés les uns par rapport aux autres.

14. Système de chauffage et / ou de climatisation selon l'une quelconque des revendications 1 à 13, **caractérisé en ce que** le système de chauffage et / ou de climatisation (1) comprend au moins l'un des composants suivants : échangeurs de chaleur (2, 3, 4), évaporateur (2), dispositif de chauffage auxiliaire, en particulier dispositif de chauffage auxiliaire (4) à coefficient de température positif (CTP), filtre, volet de mélange de température, un ou plusieurs conduits d'écoulement (6, 7, 8, K, W, 103, 104, 105) et un ou plusieurs volets de commande (5) servant au mélange et / ou à la répartition de l'air fourni aux conduits d'écoulement (6, 7, 8).
